# EUROPEAN PATENT APPLICATION

(11) **EP 4 467 423 A1**
(43) Date of publication of application: **27.11.2024**
(21) Application number: 23174893.0
(22) Date of filing: 23.05.2023
(51) Int. Cl.: B62D 5/09, B62D 1/22

(54) **HYDRAULIC ARRANGEMENT**

(71) Applicant: Danfoss Power Solutions ApS, 6430 Nordborg (DK)
(72) Inventor: BAUER, Thomas, 6430 Nordborg (DK); HANSEN, Niels Bjarne, 6430 Nordborg (DK)
(74) Representative: Keil & Schaafhausen Patentanwälte PartGmbB

(57) **Abstract**

A hydraulic arrangement comprising a supply port (5), a working port arrangement (20), a valve arrangement (3, 8, 21) controlling a supply of hydraulic fluid from the supply port (5) to the working port arrangement (20), a command device (20) controlling the valve arrangement (3, 8, 21), and a sensor arrangement (19) sensing at least a working condition of the hydraulic arrangement is described.

In such a hydraulic arrangement a simple way should be given to achieve a safety functionality.

To this end the valve arrangement (3, 8, 21) comprises flow limiting means (9) operatively coupled to the sensor arrangement (19), wherein the flow limiting means (9) limit the flow to the working port arrangement (20) depending on the at least one working condition of the hydraulic arrangement.

## Description

The present invention relates to a hydraulic arrangement comprising a supply port, a working port arrangement, a valve arrangement controlling a supply of hydraulic fluid from the supply port to the working port arrangement, a command device controlling the valve arrangement, and a sensor arrangement sensing at least a working condition of the hydraulic arrangement.

Furthermore, the invention relates to a steering arrangement having such a hydraulic arrangement.

In the present description, a hydraulic steering arrangement is used as an example for the hydraulic arrangement. However, the hydraulic arrangement can be used in combination with other hydraulically operated devices, like a lifting device.

The working port arrangement of such a hydraulic arrangement is usually connected to a hydraulic motor. When the hydraulic motor is used in connection with the hydraulic arrangement, the hydraulic motor acts on steered wheels in order to determine a driving direction of a vehicle equipped with the steering arrangement. When the hydraulic arrangement is used in connection with a lifting device, like a crane, the hydraulic motor is used to lift or lower a load or to actuate other parts of the crane, like a rotational drive.

In all cases, several safety requirements must be fulfilled.

It is an object of the invention to show a simple way to achieve a safety functionality of a hydraulic arrangement.

This object is solved with a hydraulic arrangement as described at the outset in that the valve arrangement comprises flow limiting means operatively coupled to the sensor arrangement, wherein the flow limiting means limit the flow to the working port arrangement depending on the at least one working condition of the hydraulic arrangement.

The flow of hydraulic fluid to the working port arrangement determines the speed with which a hydraulic motor connected to the working port arrangement can be operated. Thus, the working speed of the hydraulic motor can be adapted to at least a working condition of the hydraulic arrangement. The working condition depends, for example, on the environment or the use of the hydraulic arrangement. In case of a hydraulic steering arrangement, the working condition can be, for example, the speed with which the steered vehicle moves or a characteristic of the ground on which the vehicle drives. When the vehicle moves slowly, for example in an off-road application, it is desirable to have a high steering speed. When the vehicle drives on road at higher vehicle speeds, a slow steering speed is desired to avoid dangerous situations which can occur when the steered wheels are steered to fast. In case of a crane, the working condition can be a load which is lifted by the crane. When the load is heavy, a rotational speed of a boom about a vertical axis should be lower than in an unloaded state of the crane.

The flow limiting means may be connected to the sensor arrangement, especially directly connected.

In an embodiment of the invention the flow limiting means comprise a flow limiting valve. Such a valve can control the flow to the working port arrangement further to the control of the fluid by the valve arrangement.

In an embodiment of the invention the flow limiting means comprise valve adjustment limiting means controlling an opening degree of at least one valve of the valve arrangement. In this case the valve of the valve arrangement itself can be used to limit the flow of hydraulic fluid to the working port arrangement further to the basic flow control.

In an embodiment of the invention the valve arrangement comprises at least a first flow control path having a first flow control valve and a second flow control path having a second flow control valve, wherein the flow limiting means limit the flow through one of the flow paths. In other words, the flow through the other flow control paths is unrestricted by flow limiting means and controlled only by the respective flow control valve.

In an embodiment of the invention at least one of the first flow control valve and the second flow control valve is an electrically controlled valve and the flow limiting means limit the flow through the electrically controlled valve. When, for example, the first flow control valve is in form of a hydraulic steering unit, and the second flow control valve is the electric controlled valve, then the first flow control valve is mechanically actuated so that in this case no error can occur due to a malfunction of an electric control. The electrically controlled valve is more prone to a risk of a malfunction. However, the use of the flow limiting means decouples the functionality of an electrically controlled valve from the flow limiting function.

In an embodiment of the invention the one of first flow control path and second flow control path without flow limiting means is directly connected to the working port arrangement. Thus, a hydraulic motor or actuator connected to the working port arrangement can be directly controlled by this flow control path.

The object is solved with a steering arrangement having such a hydraulic arrangement, wherein the valve arrangement comprises at least two steering valves arranged in parallel between the supply port and the working port arrangement.

In such a steering arrangement one steering valve can be used for controlling a basic flow to a steering motor connected to the working port arrangement, wherein the other steering valve can be used to modify the flow of hydraulic fluid to the working port arrangement. In particular, the second steering valve can be used as amplification means, so that the flow to the working port arrangement can be increased without the necessity to increase the size of a hydraulic steering unit comprising the first steering valve. Thus, when a high steering speed is desired, both steering valves can be actuated in parallel.

In an embodiment of the invention the flow limiting means limit the flow through one of the steering valves. The flow through the other steering valve is not limited by the flow limiting means, so that independently of the functionality of the flow limiting means, there is no additional risk of a malfunction.

In an embodiment of the invention one of the steering valves is an electric steering valve and the flow limiting means limit the flow through the electric steering valve. As mentioned above, the risk of a malfunction is higher in connection with an electric steering valve than with a mechanical valve. Thus, the flow limiting means can be used as additional safety means.

In an embodiment of the invention the flow limiting means allow a minimum flow through the electric steering valve. In this case, the electric steering valve can be used to steer out a safe maximum correction flow, for example to perform an anti-drift correction, an electronic dead-band compensation, and/or a stabilisation.

An embodiment of the invention will now be described with reference to the drawing, in which:
- Fig. 1: shows a schematic diagram of a steering arrangement comprising a hydraulic arrangement,
- Fig. 2: shows a first possibility of the arrangement of flow limiting means,
- Fig. 3: shows a second possibility of the arrangement of flow limiting means,
- Fig. 4: shows a first possibility of a flow limiting function,
- Fig. 5: shows a second possibility of a flow limiting function
- Fig. 6: shows a first embodiment of a valve having a flow limiting function,
- Fig. 7: shows a second embodiment of a valve having a flow limiting function,
- Fig. 8: shows a third embodiment of a valve having a flow limiting function,
- Fig. 9: shows an embodiment of a hydraulic circuit having a flow limiting function, and
- Fig. 10: shows schematically a hydraulic circuit of a steering having a flow limiting function.

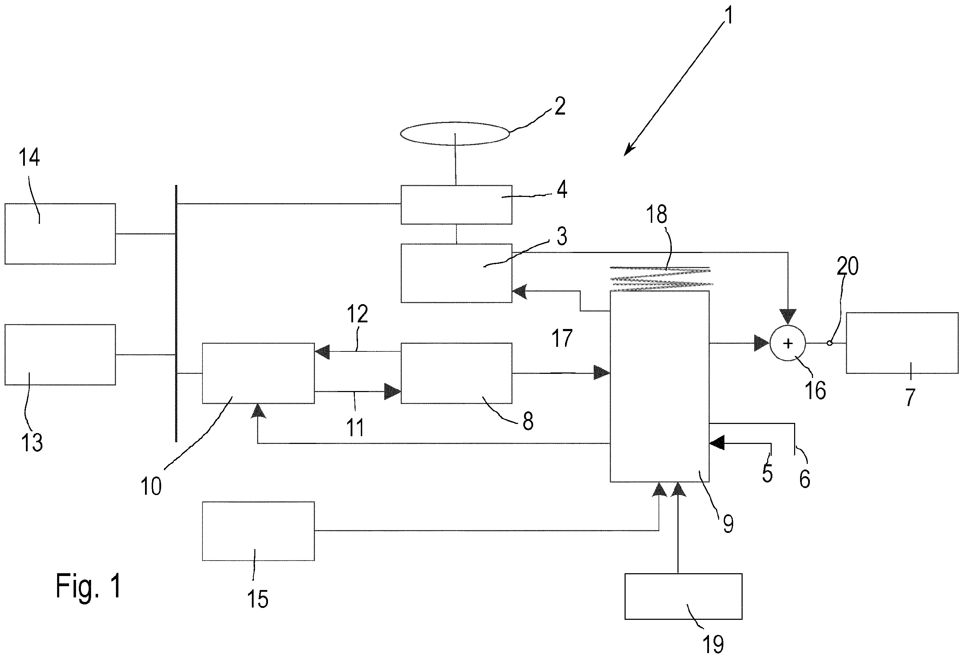

Fig. 1 schematically shows a hydraulic steering arrangement 1 having a steering wheel 2 which is connected to a hydraulic steering unit 3. A steering wheel sensor arrangement 4 is arranged between the steering wheel and the hydraulic steering unit 3. However, the steering wheel sensor arrangement 4 can also be arranged at another position.

The steering arrangement 1 comprises a supply port 5 and a return port 6. In a way not shown, the supply port 5 is connected to the hydraulic steering unit 3. The hydraulic steering unit 3 is connected to a steering motor 7 by means of a working port arrangement 20 (only one working port being shown). This connection is a direct connection, i.e. the flow from the hydraulic steering unit 3 is supplied to the steering motor 7 without any limiting means. The steering motor 7 can be, for example, in form of a steering cylinder.

An electro-hydraulic steering valve 8 is connected to the steering motor 7 by means of flow limiting means 9. The electro-hydraulic means 8 is also connected to the supply port 4 in a way not shown. The electrohydraulic steering valve 8 is controlled by means of a pilot pressure which is produced by a control valve 10, for example in form of a proportional valve. The control valve 10 receives control pressure from the supply port 5. The control valve 10 is connected to the electrohydraulic steering valve 8 in a closed loop. The control valve 10 produces a hydraulic pressure to the electrohydraulic steering valve 8 to define a setpoint 11, i.e. an information in which direction and to which extend the electrohydraulic steering valve 8 should be opened, and receives a position feedback 12.

The control valve 10 in turn can be controlled by means of an auto-guidance 13, for example by means of a GPS signal, and by means of a gyro 14 which can be used for an anti-drift correction. The steering sensor arrangement 4 is also connected to the control valve 10.

The flow limiting means 9 are controlled by means of a solenoid valve 15. The way in which the flow limiting means 9 are controlled will be described below. According to one aspect, the solenoid valve 15 may be considered forming part of the flow limiting means 9. In a modification, the sensor arrangement 19 may be connected to the solenoid valve 15 and the solenoid valve 15 may control the flow limiting means 9 based on sensor data obtained from the sensor arrangement 19.

Flow from the electrohydraulic steering valve 8 which is in addition controlled by the flow limiting means 9 is combined at a summing point 16 with the flow from the hydraulic steering unit 3 and supplied to the steering motor 7.

A reaction flow 17 from the steering motor 7 is fed back to the hydraulic steering unit 3 and from there to the tank port 6 (not shown).

The hydraulic steering unit 3 has a direct connection to the steering motor 7 via the working port arrangement 20, to which the steering motor 7 is connected. The electrohydraulic valve 8 supplies flow to the steering motor 7 via the flow limiting means 9. The output flow of the flow limiting means 9 is summed with the flow from the hydraulic steering unit 3 to achieve electrohydraulic steering functionality, such as variable steering wheel ratio and auto-guidance.

Instead of the hydraulic steering unit 3 it is also possible to use two electrohydraulic steering valves in parallel and then again to use two flow limiting means, one in each branch. The flow limiting means 9 could also be mounted before the electrohydraulic steering valve 8 in the circuit shown in the drawing according to Fig. 1 or in the solution with two electrohydraulic steering valves. It could also be built into the electrohydraulic steering valve 8.

For off-road applications, the solenoid valve 15 is energized, the flow limiting means 9 is pressurized and pushed up against the force of a spring 18. In this position of the flow limiting means 9, the electrohydraulic steering valve can deliver unrestricted flow to the steering motor 7. The return flow from the steering motor 7 is passed over the flow limiting means 9 to a tank, as mentioned above.

For on-road use at higher vehicle speeds, where electrohydraulic steering flows are not needed, the solenoid valve 15 is de-energized. The flow limiting means 9 is actuated. When the flow limiting means 9 is in form of a spool valve, the valve spool is pushed to the flow limiting position by the spring 18. This flow limiting position can also be termed "flow guard position". In the flow guard position, the flow from the electrohydraulic steering valve 8 is restricted or limited to a maximum of, for example, 2-3 L per minute regardless of how much the electrohydraulic steering valve steers out. This allows the control valve 10 to steer out a safe maximum correction flow up to 2-3 L per minute for the electrohydraulic steering functionalities, such as anti-drift correction, electronic dead-band compensation and stabilization via the gyro sensor 14.

The flow limiting means 9 operate or are actuated depending on a working condition of the hydraulic steering unit. This working condition can be, for example, the speed of the vehicle equipped with the hydraulic steering arrangement 1. It can also be a load of the vehicle or the quality of the underground on which the vehicle drives. The speed, the load or the underground can be detected by means of sensors 19 or a single sensor. It is also possible that a driver inputs manually an information indicating the working condition.

In the following, the speed is used as an example for the working condition. The operation of the flow limiting means is controlled dynamically as a function of the vehicle speed.

At low vehicle speeds, larger flows controlled by the electrohydraulic steering valve 8 are desired, for example for variable steering functionalities with the steering. At lower vehicle speeds, e.g. 0-15 km/h, an erroneous flow during the safety response time is deemed controllable for the operator. The vehicle direction will change due to the erroneous flow, but the operator will be able to correct the direction in a controllable manner. Here, the flow limiting means 9 allow the full flow of the electrohydraulic steering valve 8 to the steering motor 7.

At higher vehicle speeds, for example 15-60 km/h, there is less need for large steering flows. Instead, the steering by means of the electrohydraulic steering valve 8 is restricted to electric dead-band compensation, anti-drift correction and direction stabilization by the gyro sensor 14. In this situation, the flow limiting means 9 shall be in "flow guard position", i.e. should limit the flow from the electrohydraulic steering valve 8 to the steering motor 7.

Ensuring a safe maximum correction flow when the flow limiting means is in "flow guard mode", shifts the responsibility of limiting erroneous flows from the electronic of a control valve 10 and the electrohydraulic steering valve 8 to mechanics, i.e. the flow limiting means 9. Thus, the following advantages can be achieved:
It lowers the requirements to response time of the software and hardware of the control valve 10 and the electrohydraulic steering valve 8.

The safety integrity level for the hardware and software may be adequate for today's equipment or even lowered.

A wider range of steering actuators may be used.

The requirements for the steering wheel sensor arrangement 4 may be lowered. Off-loading the hardware and software may have a cost-reducing effect.

Control valve's 10 response times may be acceptable as the failure effect is limited by the flow limiting means 9. With current valve designs, the control valve 10 is fully responsible for limiting the amount of the flow through the electrohydraulic steering valve and the time it is output in case of a malfunction.

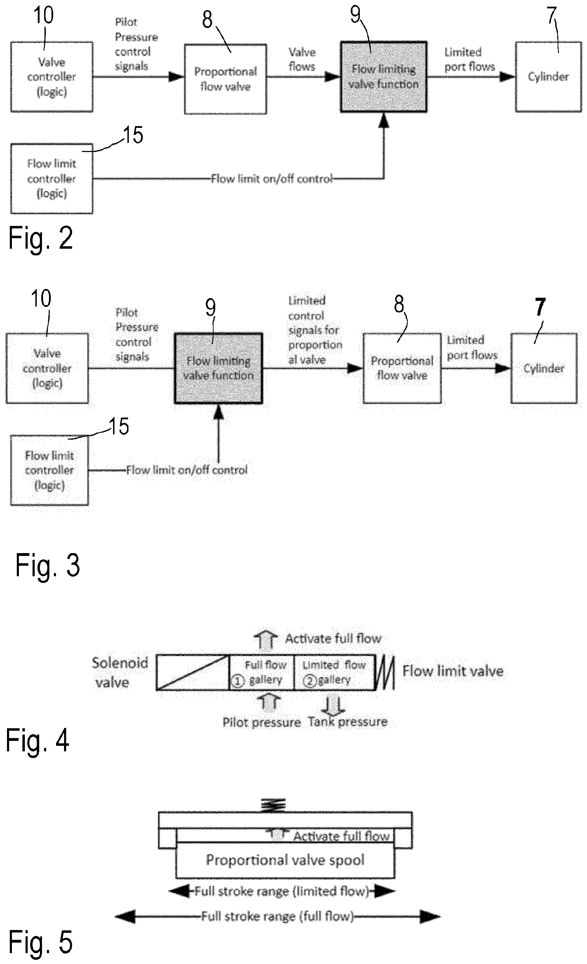

Fig. 2 and 3 show different possibilities to limit the flow.

In all Figures the same elements are denoted with the same reference numerals.

Fig. 2 basically shows the same arrangement as Fig. 1. The control valve 10 controls the electrohydraulic steering valve 8 which is in form of a proportional valve. The flow limiting means 9 limit the flow supplied by the electrohydraulic steering valve 8 through the steering motor 7. The flow limiting means 9 are controlled by a solenoid valve in form of a flow limit controller. The flow limiting means can be arranged upstream or downstream the electrohydraulic valve 8. The electrohydraulic steering valve 8 can also be an electric steering valve.

In Fig. 3 a flow limiting valve function is achieved in a different way. The flow limit controller 15 modifies the set point 11 of the electrohydraulic steering valve 8, so that the spool (or any other valve elements of the electrohydraulic steering valve 8) cannot be fully steered-out, so that in this case again the flow to the steering motor 7 is limited.

This is schematically shown in Fig. 4 and 5.

In Fig. 4 the flow limiting valve function is realized by a dedicated limiting valve. This is shown schematically by "limited flow gallery".

In Fig. 5 the flow limitation is achieved by limiting the stroke of the valve spool of the electrohydraulic steering valve.

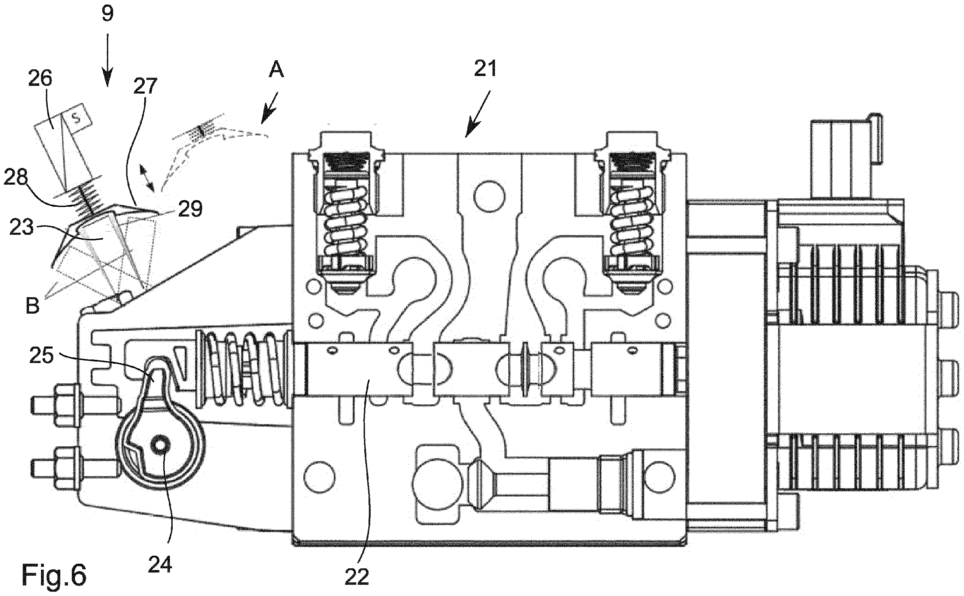

Fig. 6 shows schematically a valve 21 which can be the proportional valve 8 of Fig. 1. The valve 21 comprises the spool 22 which is mechanically connected to a lever 23.

The spool 22 and the lever 23 may be coupled, e.g. mechanically, such that a movement of the spool 22 correlates with a movement of the lever 23.

The spool 22 is movable by means of a lever 23. In other words, movements of the lever 23 may enslave the spool 22 to corresponding movements. The lever 23 acts on an axis 24 which in turn drives a second lever 25 engaging the spool 22.

In the embodiment shown on Fig. 6, the valve 21 includes the flow limiting means 9. A solenoid 26 acts on a limiting element 27. The limiting element 27 is loaded by a spring 28 when the solenoid 26 is not activated. In this case, the movement of the lever 23 is limited as shown with full lines 29. When the solenoid 26 is activated, the spring 28 is compressed (cf. the dotted illustration A) and withdrawn from the lever 23, so that the lever 23 can reach the two positions B shown in dotted lines. In this way the rotational movement of the second lever 25 is limited. When the rotation movement of the second lever 25 is limited the linear movement of the spool 22 is limited as well. The flow limiting means 9 is activatable and deactivatable, in this embodiment via the solenoid 26.

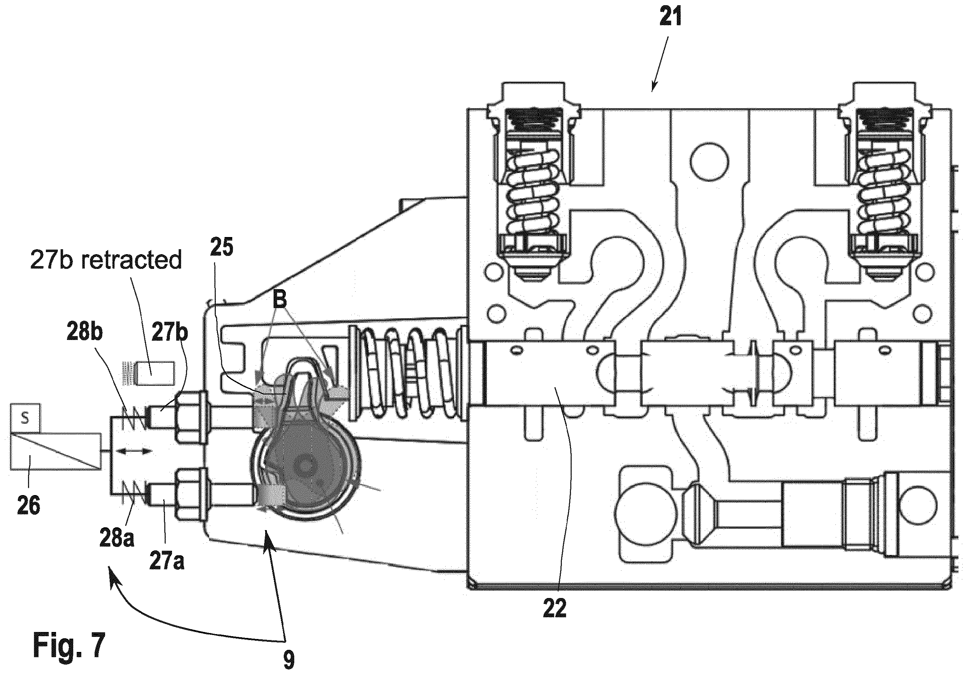

Fig. 7 shows a somewhat similar embodiment of the valve 21. Same elements are denoted with the same reference numerals as in Fig. 6. The solenoid 26 acts on two limiting elements 27a, 27b which directly limit the rotational movement of the second lever 25 when the solenoid 26 is not active. When the solenoid 26 is activated, the springs 28a, 28b are compressed and the limiting elements 27a, 27b are withdrawn, so that the second lever 25 can be moved to the two positions B shown in dotted lines.

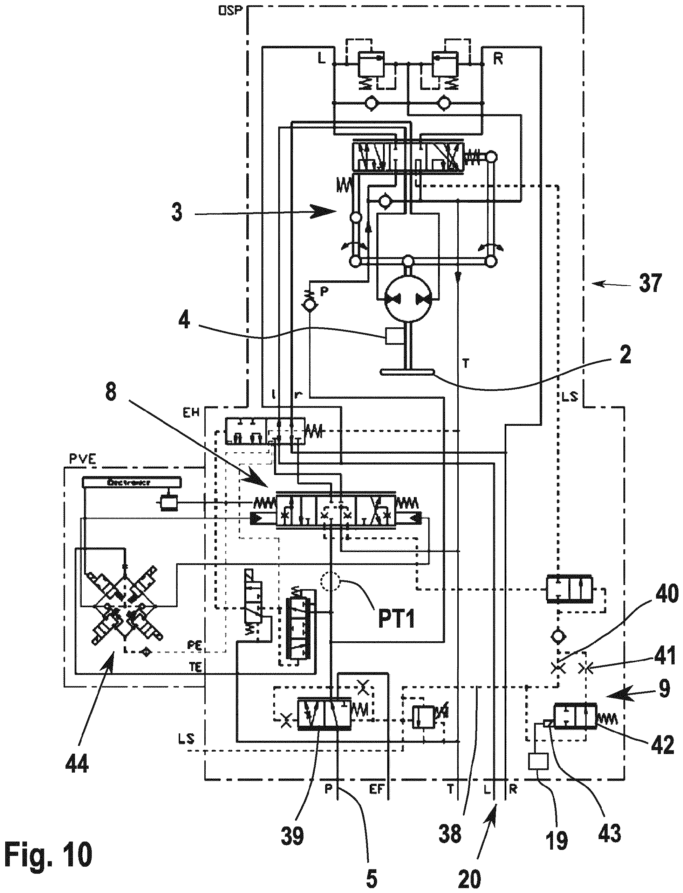

In a modification (not shown), at least the second lever 25 moves in accordance with the movements of the spool 22. Also in this case, the second lever 25 is coupled, e.g. mechanically, with the spool 22. The movements of the spool 22 may enslave the second lever 25. For example, the spool 22 is actuated electro-hydraulically. The spool 22 may be moved via an actuating pilot pressure generated in a bridge of solenoids, e.g. a bridge including four solenoids. Actuation of the spool 22 via the actuating pilot pressure then moves the second lever 25. As the second lever 25 is coupled with the spool 22, limiting the movements of the second lever 25 as described with regard to Fig. 7 limits the movements of the spool 22 also in this embodiment. As an example, an arrangement with a bridge 44 including four solenoids for actuating a steering valve in the form of the proportional valve 8 is shown in Fig. 10.

Similarly, the lever 23 may be coupled to the spool 22, e.g. mechanically, for example via the second lever 25, wherein movements of the spool 22 enslave the lever 23. Hence, limiting the movements of the lever 23, for example as described with regard to Fig. 6, limits the movements of the spool 22 as well even if the spool 22 is moved by the actuating pilot pressure.

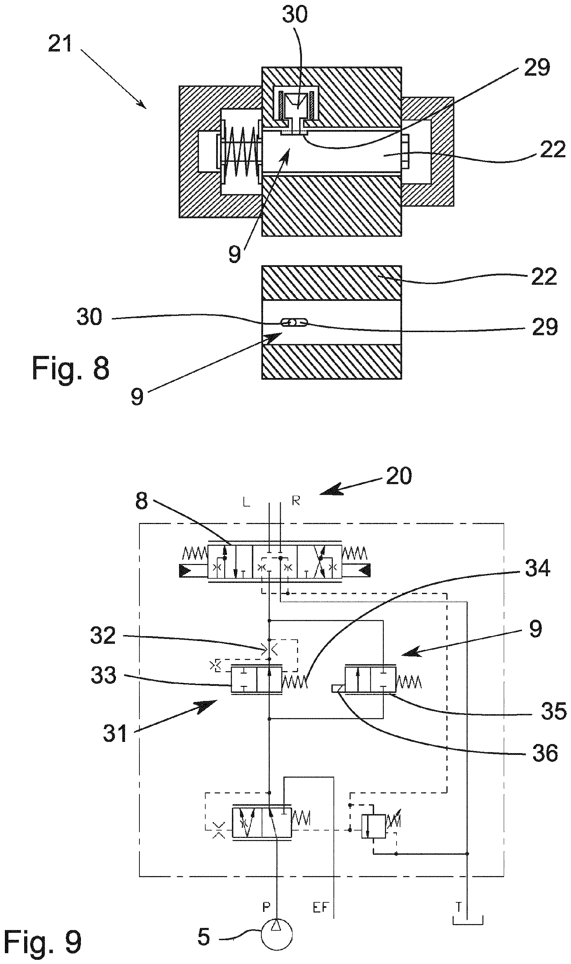

Fig. 8 shows schematically a third embodiment of the valve 21. Also in this embodiment, the valve 21 includes the flow limiting means 9. The spool 22 comprises the longitudinal groove 29 on its outside. The pin 30 can be activated by the solenoid (not shown) to engage the groove 29 or to retract from the groove 29. When the pin 30 engages the groove 29, the axial movement of the spool 22 is limited.

When the actual move of the spool is limited in the three embodiments shown, the spool can open orifices only to a limited extent, so that flow areas formed by the orifices have also the limited size corresponding to a larger flow resistance. Thus, when the pressure is kept constant, this leads to a limited flow.

Fig. 9 shows an embodiment, in which the flow limitation is achieved hydraulically. The valve 8 is connected to the supply port P by means of a pressure compensated flow control valve 31. The pressure compensated flow control valve 31 is arranged in series with an orifice 32. A pressure at a point between the flow control valve 31 and the orifice 32 acts on a valve element 33 in closing direction. The force of the spring 34 acts in an opening direction. The pressure at the point upstream the orifice 32 depends on the flow through the flow control valve 31. The pressure increases with the flow. Thus, the valve element 33 throttles the flow to the predetermined level. Only this flow can reach the valve 8. A bypass valve 35 which is controlled by a solenoid 36 is arranged in parallel to the flow control valve 31. When the valve should be operated with full flow, the solenoid 36 is activated, so that the full flow from the supply port P can reach the valve 8.

With regard to the embodiment shown in Fig. 9, the flow limiting means 9 comprises a flow control valve arrangement and a selectively activatable flow bypass for bypassing fluid in parallel to the flow control valve. The flow control valve arrangement includes the flow control valve 31 and the orifice 32 and the activatable flow bypass includes the bypass valve 35 with the solenoid 36.

Fig. 10 shows schematically a hydraulic steering 37 which is not described in detail. A basically similar hydraulic steering is described in EP 2 762 387 A1. For the purpose of the present invention, it is sufficient to look at a line 38 connected to a load sensing port LS of a load sensing system.

If there is a pump pressure (for example 200 bar) at the supply port 5, then this pump pressure will propagate through a priority valve 39 to the electrohydraulic steering valve 8. Here, the pump pressure may meet a closed port of the electrohydraulic steering valve 8 (see the situation shown in Fig. 10). Hence, a pressure on the left side of the priority valve 39 in Fig. 10 will build up and as soon the this pressure is large enough to overcome a counteracting spring force and a force resulting from an LS pressure applied by the load sensing port LS (at the right side of the priority valve 39 in Fig. 10), the priority valve 39 will shift from the position as shown in Fig. 10 to another position (not shown in Fig. 10), in which it delivers fluid pressure also to an EF port. The LS pressure at the load sensing port LS influences the control of the priority valve 39.

Two bleeds or orifices 40, 41 are arranged in parallel in the line 38, wherein one of these orifices, namely orifice 41, is arranged in series with a valve 42 which in turn is controlled by a solenoid 43.

When a solenoid 43 is inactive, the valve 42 is open, so that both orifices 40, 41 are used to let pass hydraulic fluid. Accordingly, an additional bypass flow path in parallel to the orifice 40 is open. The flow resistance of two orifices 40, 41 is lower than the flow resistance of the single orifice 40. When the valve 42 is in this "flow guard position" as shown in Fig. 10, there is less fluid/pressure available than if the valve 42 is closed.

When the valve 42 is closed, the pressure in the LS system, especially in the line 38 upstream the orifice 40 at the priority valve 39, is changed. In the exemplary embodiment shown in Fig. 10, the valve 42 is closed when the solenoid 43 is active.

By opening and closing the valve 42 (and hence the additional bypass flow path with orifice 41), one can change the LS pressure in relation to a flow guard principle.

Starting from Fig. 10, instead or in addition to the bypass flow path in parallel to the orifice 40 as shown in Fig. 10, the flow limiting means 9 as shown in Fig. 9 can be included in the fluid connection from the priority valve 39 to the electro-hydraulic steering valve 8, for example at position PT1 shown in Fig. 10.

According to another aspect, instead or in addition to the bypass flow path in parallel to the orifice 40 as shown in Fig. 10, the electrohydraulic steering valve 8 in the hydraulic steering 37 shown in Fig. 10 can be implemented in accordance with any of the embodiments of the check valve 21 as shown in Fig. 6, Fig. 7, and Fig. 8.

## Claims

1. Hydraulic arrangement comprising a supply port (5), a working port arrangement (20), a valve arrangement (3, 8, 21) controlling a supply of hydraulic fluid from the supply port (5) to the working port arrangement (20), a command device (2) controlling the valve arrangement (3, 8, 21), and a sensor arrangement (19) sensing at least a working condition of the hydraulic arrangement, **characterized in that** that the valve arrangement (3, 8, 21) comprises flow limiting means (9) operatively coupled to the sensor arrangement (19), wherein the flow limiting means (9) limit the flow to the working port arrangement (20) depending on the at least one working condition of the hydraulic arrangement.

2. Hydraulic arrangement according to claim 1, **characterized in that** the flow limiting means (9) comprise a flow limiting valve.

3. Hydraulic arrangement according to claim 1 or 2, **characterized in that** the flow limiting means (9) comprise valve adjustment limiting means (23, 25, 26, 27, 27a, 27b, 29, 30) controlling an opening degree of at least one valve (8, 21) of the valve arrangement (3, 8, 21).

4. Hydraulic arrangement according to any of claims 1 to 3, **characterized in that** the valve arrangement (3, 8) comprises at least a first flow control path having a first flow control valve (3) and a second flow control path having a second flow control valve (8), wherein the flow limiting means (9) limit the flow through one of the flow paths.

5. Hydraulic arrangement according to claim 4, **characterized in that** at least one of the first flow control valve (3) and the second flow control valve (8) is an electrically controlled valve (8) and the flow limiting means (9) limit the flow through the electrically controlled valve (8).

6. Hydraulic arrangement according to claim 4 or 5, **characterized in that** the one of first flow control path and second flow control path without flow limiting means (9) is directly connected to the working port arrangement (20).

7. Steering arrangement (1; 37) comprising a hydraulic arrangement according to any of claims 1 to 6, **characterized in that** the valve arrangement comprises at least two steering valves (3, 8) arranged in parallel between the supply port (5) and the working port arrangement (20).

8. Steering arrangement according to claim 7, **characterized in that** the flow limiting means (9) limit the flow through one of the steering valves (3, 8).

9. Steering arrangement according to claim 8, **characterized in that** one of the steering valves is an electric steering valve (8) and the flow limiting means (9) limit the flow through the electric steering valve (8).

10. Steering arrangement according to claim 9, **characterized in that** the flow limiting means (9) allow a minimum flow through the electric steering valve (8).

## Amended claims

### Amended claims in accordance with Rule 137(2) EPC.

1. Steering arrangement (1, 37) comprising a hydraulic arrangement,
the hydraulic arrangement comprising a supply port (5), a working port arrangement (20), a valve arrangement (3, 8, 21) controlling a supply of hydraulic fluid from the supply port (5) to the working port arrangement (20), a command device (2) controlling the valve arrangement (3, 8, 21), and a sensor arrangement (19) sensing at least a working condition of the hydraulic arrangement, wherein the valve arrangement (3, 8, 21) comprises flow limiting means (9) operatively coupled to the sensor arrangement (19), wherein the flow limiting means (9) limit the flow to the working port arrangement (20) depending on the at least one working condition of the hydraulic arrangement,
wherein the valve arrangement (3, 8) comprises at least a first flow control path having a first flow control valve (3) and a second flow control path having a second flow control valve (8), wherein the flow limiting means (9) limit the flow through one of the first flow control path and the second flow control path,
wherein the valve arrangement comprises at least two steering valves (3, 8) arranged in parallel between the supply port (5) and the working port arrangement (20),
wherein one of the steering valves (3, 8) is an electric steering valve (8) and the flow limiting means (9) limit the flow through the one of the steering valves (3, 8), namely through the electric steering valve (8),
**characterized in that** the other one of first flow control path and second flow control path is without flow limiting means (9) and is directly connected to the working port arrangement (20).

2. Steering arrangement according to claim 1, **characterized in that** the flow limiting means (9) comprise a flow limiting valve.

3. Steering arrangement according to claim 1 or 2, **characterized in that** the flow limiting means (9) comprise valve adjustment limiting means (23, 25, 26, 27, 27a, 27b, 29, 30) controlling an opening degree of at least one valve (8, 21) of the valve arrangement (3, 8, 21).

4. Hydraulic arrangement according to claim 3, **characterized in that** at least the one of the first flow control valve (3) and the second flow control valve (8) is an electrically controlled valve (8).

5. Hydraulic arrangement according to claim 4, **characterized in that** the other one of the first flow control valve (3) and the second flow control valve (8) is in form of a hydraulic steering unit (3) and is mechanically actuated.

6. Steering arrangement according to any one of the preceding claims, **characterized in that** the flow limiting means (9) allow a minimum flow through the electric steering valve (8).
